Europäisches Patentamt

European Patent Office

Office européen des brevets

(11) Publication number: **0 038 108**
**B1**

# (12) EUROPEAN PATENT SPECIFICATION

(45) Date of publication of patent specification: **16.10.85**

(21) Application number: **81300231.8**

(22) Date of filing: **20.01.81**

(51) Int. Cl.⁴: **B 32 B 27/32,** B 29 C 49/08,
C 08 J 5/18

(54) Thermoplastic packaging films with improved heat-seal characteristics.

(30) Priority: **25.01.80 US 115530**

(43) Date of publication of application:
**21.10.81 Bulletin 81/42**

(45) Publication of the grant of the patent:
**16.10.85 Bulletin 85/42**

(84) Designated Contracting States:
**BE DE FR GB IT NL**

(56) References cited:
**GB-A- 950 406**
**GB-A-1 078 813**
**GB-A-1 176 204**
**GB-A-2 024 715**
**US-A-3 817 821**

(73) Proprietor: **MOBIL OIL CORPORATION**
**150 East 42nd Street**
**New York New York 10017 (US)**

(72) Inventor: **Nahmias, Alan Michael**
**123 Buffalo Street**
**Canandaigua New York 14424 (US)**

(74) Representative: **West, Alan Harry et al**
**Mobil Court 3 Clements Inn**
**London WC2A 2EB (GB)**

## Description

The present invention relates to a method of manufacturing thermoplastic packaging films which are capable of forming a peelable heat-seal so that the sealed film may be reopened without tearing or rupturing the film layers.

Thermoplastic films have been widely used for the packaging of a wide variety of commodities and have found widespead acceptance in the packaging of foodstuffs. Biaxially oriented polypropylene is particularly suited for use in these applications because of its excellent optical and mechanical properties, in addition to which it also offers excellent moisture barrier characteristics. Greater use of this type of film for packaging has, however, been hampered somewhat by its inability to provide good heat-seal characteristics over a wide temperature range. One technique which has been employed to remedy this has been to apply a heat-sealable coating onto the film surface after the film has been formed and oriented. However, such coating applications following film orientation are extremely costly and require expensive equipment including drying ovens and solvent recovery systems.

An alternative way of applying the heat-sealable coatings onto the surface of the film is by co-extruding a surface layer of thermoplastic onto a polypropylene film substrate. The thermoplastic coating resin has a melting point below that of the polypropylene film so that the laminar assembly may be sealed at lower temperatures. The coextrusion may occur at a stage where the base polypropylene material has already been oriented in one direction, for example, the machine direction. In this case, the assembly is subsequently oriented in the transverse direction. Films made in this way exhibit good heat-seal strengths, but because of the relatively high melting point of the copolymer surface resins, for example, ethylene-propylene copolymers, the temperature range over which heat seals may be formed is quite narrow. Moreover, when attempts are made to peel apart layers of such coated films after they have been sealed together, the film layers themselves are usually ripped and torn making reclosure of the open package with the original wrapping material difficult or impossible.

Oriented polypropylene films having a coextruded coating layer of low density polyethylene prepared by a free radical catalyzed polymerization process have been made. Because the polyethylene surface layer has a lower melting point, a broader sealing range is achieved. However, such films have shown poor adhesion between the polyethylene skin layer and the polypropylene core layer and this results in a tendency for the layers to separate during heat-sealing operations. Consequently, the seal strengths provided by such low density polyethylene skin layers are not as high as the minimum heat-seal strengths required for commercial applications. Moreover, the haze and gloss values of such films are much poorer than those exhibited by the uncoated oriented polypropylene base film.

We have now found a resinous coating material which, when applied to oriented polypropylene substrate films, enables a laminar construction which exhibits excellent heat-seal strength characteristics over a wide range of heat-seal temperatures to be produced. In addition, the heat-seals formed on these laminar constructions may be manually peeled apart by the user without rupturing or damaging the film layers. According to the present invention, the coating on the surface of the polypropylene substrate is an ethylene-vinyl acetate copolymer which is characterized by having from 6 to 10% by weight of vinyl acetate present in the copolymer structure.

The films are produced by first extruding a polypropylene base film and orienting it in one direction. The uniaxially oriented film is then extrusion coated with the ethylene-vinyl acetate copolymer to form a coated film. The coated film is then pre-heated at a specific heating rate of from 2.8 to 22°C (5° to 40°F) per second after which it is oriented in the second direction. Generally, the film is oriented first in the longitudinal direction and, after coating and pre-heating, in the transverse direction.

The final film products may be either a single layer polypropylene film, when a transparent low haze film is desired, or a coextruded polypropylene core with pigmented surface layers. The film may be made by extruding a polypropylene base web and subsequently orienting it in the machine direction by passing it through a series of draw rollers utilizing conventional film orientation techniques. The oriented basesheet may then be extrusion coated with a thin layer of the ethylene-vinyl acetate copolymer. After extrusion coating, the coated machine direction oriented polypropylene base film is subsequently preheated and stretched in the transverse direction utilizing conventional film orientation equipment such as a textile type tenter frame. It is highly desirable to control the preheating prior to transverse direction orientation of the base web, so that the preheating step is at a gradual rate of no greater than 11°C (20°F) per second. This heating rate is defined as the bulk average increase in web temperature prior to transverse direction orientation over the time in seconds this increase is accomplished. In other words this means that in no one-second time period prior to the actual transverse direction orientation should the bulk average temperature be raised by more than 11°C (20°F). Rapid heating of the coated polypropylene basesheet prior to the transverse direction orientation, e.g. by as much as 22°C (40°F) per second, results in a film which is characterized by heat-seal characteristics which offer reduced peelability and in addition, the gauge uniformity of the film is poor.

The preheating rates are from 2.8°C (5°F) per second to 22°C (40°F) per second with a preferred range of 8°C (15°F) to 14°C (25°F) per second. Although the exact reason for this phenomenon is not fully understood, it is believed that preheating rates in excess of 22°C (40°F) per second cause reduced peelability because the extrusion coated skin melts at the conditions necessary to achieve these rates and this causes it to penetrate, possibly even to permeate and completely intermingle with the surface of the machine direction oriented sheet, thus becoming completely inseparable after the transverse direction orientation. Furthermore, the gauge uniformity of the resulting transverse direction oriented web is improved by maintaining this low heating rate because it allows time for non-uniform thermal conditions introduced in the extrusion coating and quenching step to equilibrate before the actual transverse direction stretching.

The vinyl acetate content in the copolymer coating layer is from 6% up to 10% by weight. When excessive amounts of vinyl acetate, (above 10%) are present in the copolymer, the heat-seals tend to become weak so that minimum commercial heat-seal strengths are not attainable. When reduced amounts, i.e. below 6% of vinyl acetate are present in the copolymer, the resultant heat-seals are not peelable, so that when attempts are made to peel the sealed layers apart, they do not completely delaminate, but rather only partial delamination is achieved with attendant rupturing and tearing of the film layers.

### Examples

The following Examples are given by way of illustration. In these Examples, biaxially oriented polypropylene films with ethylene-vinyl acetate coatings were produced by an extrusion coating procedure in which a base polypropylene sheet was extruded and oriented in the machine direction utilizing a series of heated metal rollers. An ethylene-vinyl acetate copolymer coating was then applied as a melt coating to the machine direction oriented polypropylene by a second extruder. The applied coating was welded to the polypropylene by passing the coated basesheet onto a cold metal casting drum equipped with a pressure roller or air knife on the uncoated side of the machine direction oriented sheet, to quench the coating and bond it to the basesheet. The composite two-layer web was subsequently oriented in the transverse direction utilizing a tenter unit. The resultant product was a biaxially oriented layer of polypropylene (which offered strength and barrier characteristics) with a coating layer of an ethylene-vinyl acetate copolymer (which imparted strong and peelable seals over a wide sealing temperature).

The technique employed for the gradual preheating at approximately 11°C (20°F) per second employed infra-red heaters on one or both sides of the extrusion coated web. These heaters were placed both before the tenter frame, in the approximately parallel sections of the tenter frame, or both, the key factor being that the desired rate of heating was maintained throughout the entire preheating of the machine direction oriented web, after extrusion coating and prior to stretching in the transverse direction.

### Example 1 (comparative)

A 37 μm ethylene-vinyl acetate coated oriented polypropylene film was produced utilizing the method described above. The polypropylene resin had a specific density of 0.905 and a melt flow of 4.5. The ethylene-vinyl acetate coating layer resin had a vinyl acetate content of 4% by weight, a melt index of 1.0 and a specific density of 0.928. Conventional slip and antiblock additives were present in the resins. The base polypropylene film during machine direction orientation was stretched utilizing a stretching ratio of 5:1 at a temperature of between 135°C and 150°C. After coating, the machine direction oriented polypropylene was stretched in a ratio of 8:1 in the transverse direction at a temperature between 120°C and 155°C. The resultant coated film product had a coating thickness of about 25% of the overall film thickness.

### Example 2

The procedure of Example 1 was followed except the coating was a 9% vinyl acetate content ethylene-vinyl acetate copolymer, with a melt index of 3.0 and a specific density of 0.930.

### Example 3

The procedure of Example 1 was followed except that the total film thickness was 23 μm, with a 9% vinyl acetate content ethylene-vinyl acetate copolymer (melt index of 3.0, specific density of 0.930) and a coating thickness of about 10%.

### Example 4

The procedure of Example 1 was followed except total film thickness was 18 μm, with a 9% vinyl acetate content ethylene-vinyl acetate copolymer (melt index of 3.0, specific density of 0.930) and a coating thickness of about 10%.

### Example 5 (comparative)

The procedure of Example 1 was followed except the coating was a 12% vinyl acetate content ethylene-vinyl acetate copolymer with a melt index of 2.5 and specific density of 0.940.

### Example 6 (comparative)

The procedure of Example 1 was followed except the heating rate prior to transverse direction orientation was slightly in excess of 22°C (40°F) per second.

The data contained in the following Table 1 set forth the physical properties of the coated films produced in accordance with the preceeding examples, as well as the heat-seal characteristics of the coated film products.

**0 038 108**

TABLE 1

| Example | | 1 | 2 | 3 |
|---|---|---|---|---|
| Thickness (μm) | | 37 | 37 | 23 |
| Percent coating thickness | | 25 | 25 | 10 |
| %VA in coating | | 4 | 9 | 9 |
| Density of Coating (g/cm³) | | 0.928 | 0.930 | 0.930 |
| EVA-to-EVA Crimp Seals (3/4 sec. at 138 kPa) 93°C | | 225 pd(1) | 215 cd(2) | 310 cd |
| 104°C | | 775 pd | 600 cd | 300 cd |
| 115°C | | 500 pd | 660 cd | 335 cd |
| 127°C | | 520 pd | 560 cd | 360 cd |
| 138°C | | 490 pd | 530 cd | 465 cd |
| Modulus (kPa×10³) | MD | 1855 | 1772 | 1717 |
| | TD | 4744 | 4344 | 4399 |
| Elongation (%) | MD | 197 | 232 | 196 |
| | TD | 29 | 28 | 27 |
| Ultimate (kPa×10³) | MD | 82 | 79 | 90 |
| | TD | 358 | 292 | 313 |
| Stiffness (g/100 mm) | MD | 17.5 | 17.3 | 6.6 |
| | TD | 37.9 | 39.8 | 11.7 |
| % Dimension Chg. (135°C for 7 Min) | MD | 3.0 | 1.1 | 4.2 |
| | TD | 5.6 | 2.9 | 5.3 |
| Gloss at 7°C | | 86.8 | 75.7 | 93.6 |
| Haze % | | 1.5 | 3.4 | 0.6 |
| WVTR (4) | | 0.37 | 0.43 | 0.77 |

4

TABLE 1 (Cont'd)

| Example | | 4 | 5 | 6 |
|---|---|---|---|---|
| Thickness (μm) | | 18 | 38 | 38 |
| Percent coating thickness | | 10 | 25 | 25 |
| % VA in coating | | 8 | 12 | 4 |
| Density of Coating | | 0.930 | 0.940 | 0.928 |
| EVA-to-EVA Crimp Seals (3/4 sec. at 138 kPa) 93°C | | 170 cd | — | — |
| 104°C | | 177 cd | 725 pd | 515 |
| 115°C | | 205 cd | 800 pd | 650 T(3) |
| 127°C | | 200 cd | 595 cd | 410 T |
| 138°C | | 275 cd | 820 pd | 540 T |
| Modulus (kPa×10³) | MD | 1737 | 1517 | 1827 |
| | TD | 4668 | 2558 | 4261 |
| Elongation (%) | MD | 217 | 200 | 186 |
| | TD | 29 | 37 | 34 |
| Ultimate (kPa×10³) | MD | 97 | 72 | 88 |
| | TD | 335 | 130 | 302 |
| Stiffness (g/100 mm) | MD | 3.4 | 14.4 | 15.9 |
| | TD | 6.3 | 22.5 | 32.8 |
| % Dimension Chg. (135°C for 7 Min) | MD | 5.1 | 4.1 | 4.0 |
| | TD | 7.1 | 5.2 | 2.8 |
| Gloss at 7°C | | 92.3 | 76.3 | 85.6 |
| Haze % | | 1.1 | 3.3 | 2.0 |
| WVTR (4) | | 0.85 | — | 0.46 |

Notes:
(1) pd partial delamination
(2) cd complete delamination
(3) T film torn
(4) Water Vapor Transmission Rate—mg. $H_2O$. $cm^{-2}$. 24 $hrs^{-1}$. at 38°C, 90% relative humidity.

The heat-seal characteristics of the coated films produced in accordance with Example 1, in which the ethylene-vinyl acetate copolymer coating had a low percentage of vinyl acetate (about 4%), produced films which, when heat-sealed, could not be peeled apart to complete sealed layer delamination. The layers could only be partly peeled or delaminated before they ruptured and tore. As the vinyl acetate content was increased up to about 9% as shown by the film samples produced in accordance with Examples 2, 3 and 4, peelable seals were achieved which had good heat-seal strength characteristics. However, when the vinyl acetate content was further raised to 12% as shown in Example 5, peelability was substantially reduced. It is believed that this reduction was a consequence of the 11°C heating rate used being sufficient to allow the softer 12% vinyl acetate copolymer to melt and then penetrate the machine direction oriented sheet and form an inseparable bond after transverse direction orientation. This theory is supported in Example 6 where a heating rate slightly in excess of 22°C was used and actual film tearing occurred at most of the sealing temperatures.

**Claims**

1. A method for producing a coated, biaxially oriented polypropylene film which is adapted for being heat sealed in a manner such that the seal may be peeled apart without damaging the film layers in the seal area, which method consists of the sequential steps of:
   a. Extruding a polypropylene base film and orienting the film in one direction;
   b. Extrusion coating at least one surface of the oriented film with a single layer of an ethylene-vinyl acetate copolymer coating to form a coated film, the copolymer containing from 6 to 10 weight% vinyl acetate;
   c. Preheating the coated film at a heating rate from 2.8° to 22°C (5° to 40°F) per second; and
   d. Orienting the resultant preheated coated film in a second direction.

2. A method according to claim 1 in which the coated film is preheated at a heating rate of from 8° to 14°C per second.

3. A method according to claim 1 or 2 in which the film is oriented first in the longitudinal direction and, after coating and preheating, in the transverse direction.

**Revendications**

1. Procédé de fabrication d'une feuille de polypropylène étirée biaxialement enduite, adaptée pour être thermocollée de telle manière que la feuille collée puisse être détachée sans détériorer les couches de la feuille dans lu zone du collage, caractérisé en ce qu'il comprend les étapes succssives suivantes:
   a. extrusion d'une feuille de base en polypropylène et étirage de la feuille dans une direction;
   b. revêtement par extrusion d'au moins une face de la feuille étirée avec une seule couche d'un revêtement de copolymère éthylèneacétate de vinyle pour donner une feuille enduite, le copolymère contenant de 6 à 10% en poids d'acétate de vinyle;
   c. préchauffage de la feuille enduite à une vitesse de chauffe de 2,8° à 22°C (5° à 40°F) par seconde; et
   d. étirage de la feuille enduite préchauffée résultante dans une seconde direction.

2. Procédé selon la revendication 1, caractérisé en ce que la la feuille enduite est préchauffée à une vitesse de chauffe de 8° à 14°C par seconde.

3. Procédé selon la revendication 1 ou 2, caractérisé en ce que la feuille est étirée d'abord dans la direction longitudinale et, après revêtement et préchauffage, dans la direction transversale.

**Patentansprüche**

1. Verfahren zur Herstellung eines beschichteten, biaxial orientierten bzw. verstreckten Polypropylenfilms, der geeignet ist, heißversiegelt zu werden, und zwar in einer Weise, daß die Versiegelung abgezogen werden kann ohne Beschädigung der Filmschichten im Versiegelungsbereich, dadurch gekennzeichnet, daß das Verfahren aus den folgenden Verfahrensschritten besteht:
   a. Extrudieren eines Polypropylenbasisfilms und Orientierung des Films in eine Richtung;
   b. Extrusionsbeschichtung von wenigstens einer Oberfläche das orientierten bzw. verstreckten Films mit einer Einzelschicht einer Ethylenvinylacetat-copolymerbeschichtung zur Bildung eines beschichteten Films, wobei das Copolymer 6 bis 10 Gew.% Vinylacetat enthält;
   c. Vorwärmen des beschichteten Films mit einer Erwärmungsschwindigkeit von 2,8 bis 22°C (5 bis 40°F) pro s; und
   d. Orientierung bzw. Verstreckung des erhaltenen vorerwärmten beschichteten Films in eine zweite Richtung.

2. Verfahren nach Anspruch 1, dadurch gekennzeichnet, daß der beschichtete Film mit einer Erwärmungsgeschwindigkeit von 8 bis 14°C pro s vorerwärmt wird.

3. Verfahren nach Anspruch 1 oder 2, dadurch gekennzeichnet, daß der Film zuerst in Längsrichtung und nach Beschichtung und Vorerwärmung in der Querrichtung verstreckt wird.